(19) Europäisches Patentamt
European Patent Office
Office européen des brevets

(11) Publication number: **0 346 259 A2**

# (12) EUROPEAN PATENT APPLICATION

(21) Application number: **89480059.8**

(22) Date of filing: **25.04.89**

(51) Int. Cl.$^4$: **G 06 F 15/20**

(30) Priority: **07.06.88 US 203197**

(43) Date of publication of application: **13.12.89 Bulletin 89/50**

(84) Designated Contracting States: **DE FR GB**

(71) Applicant: **International Business Machines Corporation**
**Old Orchard Road**
**Armonk, N.Y. 10504 (US)**

(72) Inventor: **Barker, Barbara Ann**
**2800 Carmel Drive**
**Round Rock Texas 78664 (US)**

**Edel, Thomas R.**
**9410 Topridge Drive**
**Austin Texas 78750 (US)**

**Stark, Jeffrey A.**
**2905 Valleyview Grapevine**
**Texas 76501 (US)**

(74) Representative: **Tubiana, Max**
**Compagnie IBM France Département de Propriété Intellectuelle**
**F-06610 La Gaude (FR)**

## (54) Single data stream architecture for presentation, revision and resource document types.

(57) Electronic creation, modification and presentation of composed documents containing mixed document type characteristics is specifiable in a single data stream definition. This eliminates the proliferation of different architecture protocols that describe the various states of a document and reflects the natural condition of a composed document with some sections being in revisable state while other document sections are completed and therefore suitable for presentation. In addition, this data stream definition functions in an interchange environment and is therefore "self-contained" and capable of containing all the resources (e.g., fonts for text data, etc.) required for complete document composition fidelity.

FIG.1

EP 0 346 259 A2

**Description**

## SINGLE DATA STREAM ARCHITECTURE FOR PRESENTATION, REVISION AND RESOURCE DOCUMENT TYPES

### BACKGROUND OF THE INVENTION

### Field of the Invention

The present invention generally relates to digital communications and, more particularly, to the electronic creation, modification and presentation of composed documents containing mixed document type characteristics specifiable in a single data stream definition.

### Description of the Prior Art

The description of a data stream in a digital communications network, such as a local area network (LAN) or larger teleprocessing networks, presents many problems, particularly where the data streams generated at various terminals or workstations operating with a variety of application programs generate data streams which have different control characters and protocols depending on the intent of the communicated information (e.g., a presentation document, a revision document, etc.).

There are three major classifications of a document. These are the revisable document, the final-form document and the resource document. The content of the document determines its intent, and currently unique data streams, specific to each classification, exist for each document type.

Revisable-form documents provide a model definition of the formatting intent of elements within the document with the characteristic of being easily changed. A revisable-form document consists of data and information which directs the presentation of the data. The format information of a document is specified in fields of the document called environment specifications. These declarations accompany the document in its revisable-form, and the declarations can be modified at any time. Some aspects of a formatting declaration are the page width, page length, and page numbering scheme used in the document. Based on the document specifications, one or more pages may be generated from the space requirements of the object data assigned to the areas defined in the formatting specifications. The process of revising a document may cause the space requirements of the object data to increase or decrease the number of resultant pages.

The originator of a document might, for example, specify that it have several logical page types, each consisting of pages bearing the section heading centered at the top, and that the pages be numbered sequentially within each section. The originator may have to specify the format separately for each document. Some aspects of the format can be stated once at the beginning of the document. Other aspects can be stated within the document, for example, at the beginning of each logical page type. In each case, the originator's specification accompanies the data of the document within the data stream that represents the document.

The revisable-form document can also reference resources that are to be included with the present document at the time it is transformed into final form. Pages may consist of logical page elements, and if all pages are to be formatted the same, then this is specified once in the document, at the beginning. The space that the body may occupy is described by the boundaries (i.e., left, right, top, and bottom) within which the data appears.

Final-form documents provide explicit presentation characteristics for document elements. The logical intent for various elements shows up in the presentation characteristics of the displayed document. Final-form documents are difficult to revise. A data stream that contains a final-form document is meant to be processed sequentially from beginning to end. The layout structure of the document determines the presentation form of all data objects that are contained within the document.

When a document is transformed from revisable-form to final-form, the appropriate logical formatting declarations specified within the revisable-form document are converted to presentation form declarations within the final-form document. These declarations are imbedded within the document where they are needed in order to format the document. A final form document can be interpreted by output servers such as Spool Writers that do not contain the logic necessary to interpret revisable-form document constructs.

Documents contained in a final-form data stream can be printed on different printers or viewed on different display screens, each producing the same document content in the same format as the others, within the capabilities of the device. The final-form document can also reference resources that are to be included with the present document. The resources exist externally to the document and may reside on a direct access storage device (DASD) library.

A resource document contains objects that may be stored in a DASD library for subsequent reference in a revisable or final-form document, or resource documents can be defined for some other purpose. Resource objects in a data stream may consist of various items such as image objects, presentation text objects, revisable text objects, graphic objects, audio objects, bar code objects, line type objects, color tables, pages, fonts, and the like. Resources may be referenced repeatedly from within a presentation or revision document and are available to any application (e.g., document composer/processor) that possesses the resource name and library accessability.

What is needed in document interchange is a set of standard interfaces that describe in a single data stream revision, presentation and revision constructs. This capability will allow documents to be interchanged among a wide variety of products adhering to the standard document protocol. Preferably, the architecture should include a set of structured fields (commands) that allow various object types (i.e., text, graphics, audio, bar code, image, business graphics, calendar, formatted data, and supporting data object resources including fonts, color tables and the like) to be integrated into a single data stream architecture. The data identifier or data stream context then will determine whether the data resource data, revision data or presentation data. This architecture would provide a set of conventions for both current and future products which must interchange documents with other unknown products.


## SUMMARY OF THE INVENTION

It is therefore an object of the present invention to provide a single data stream definition for use in the electronic creation, modification and presentation of composed documents containing mixed document type characteristics.

The single document data stream definition according to the invention describes three unique document types that may exist separately or be combined in any desired mixture within a single data stream. By bounding each data stream construct with a unique BEGIN-END delimiter, there are no implied relationships existing between physically sequential elements that appear in the data stream. Each BEGIN-END construct has an associated "state" that is architecturely described for any possible context in which it may exist. Nested constructs are thus possible and easily identified. The BEGIN-END explicit delimiters contribute to the natural hierarchical nature of a single data stream definition.


## BRIEF DESCRIPTION OF THE DRAWINGS

The foregoing and other objects, aspects and advantages of the invention will be better understood from the following detailed description of a preferred embodiment of the invention with reference to the drawings, in which:

Figure 1 is a block diagram representation of the single data stream and its nesting hierarchical relationships according to the invention;

Figure 2 is a block diagram illustrating the data stream interchange environment using the single data stream architecture;

Figure 3 is a block diagram illustrating single data stream processing for an application interpreter revising and merging data streams from two other applications;

Figure 4 is a block diagram illustrating the processing environment of the single data stream for a user application program;

Figure 5 is a block diagram representing an example of the data stream according to the invention;

Figure 6 is a block diagram illustrating page elements of a document; and

Figure 7 is a flow diagram showing the logic of processing a single data stream containing mixed document type characteristics.


## DETAILED DESCRIPTION OF A PREFERRED EMBODIMENT OF THE INVENTION

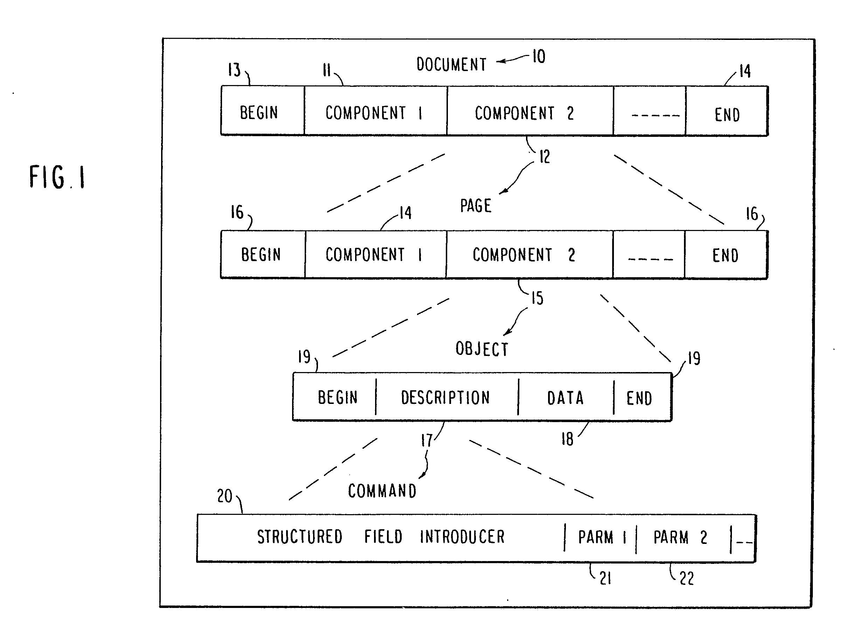

All function and data comprising the single data stream are grouped into logical records called structured fields. These structured fields are in effect "commands" with zero or more parameter fields. All structured fields are contained within a BEGIN-END pair in order to limit their scope within the hierarchy. In the single data stream, a construct is a collection of these structured fields which are related to one another and is bounded by a BEGIN-END pair. This is illustrated in Figure 1 wherein a DOCUMENT 10 is shown as composed of a plurality of components 11, 12 bounded by a BEGIN-END pair 13. One of these components 12 is a PAGE which is in turn composed of a plurality of components 14, 15 bounded by a BEGIN-END pair 16. One of these components 15 is an OBJECT composed of a description 17 and data 18 bounded by a BEGIN-END pair 19. The description 17 in turn is a command composed of a structured field introducer 20 followed by a plurality of parameters 21, 22.

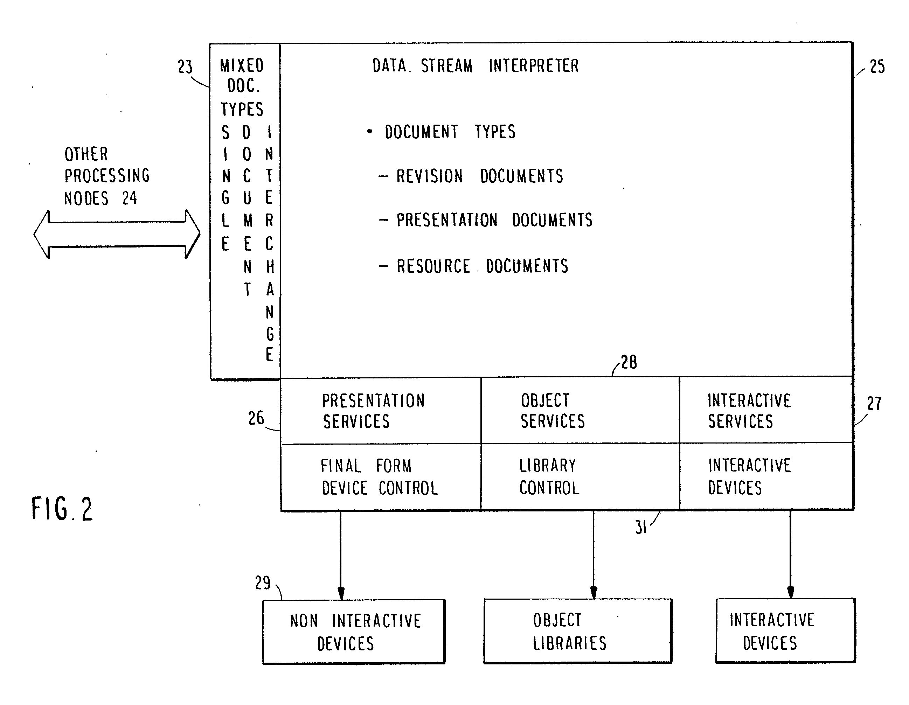

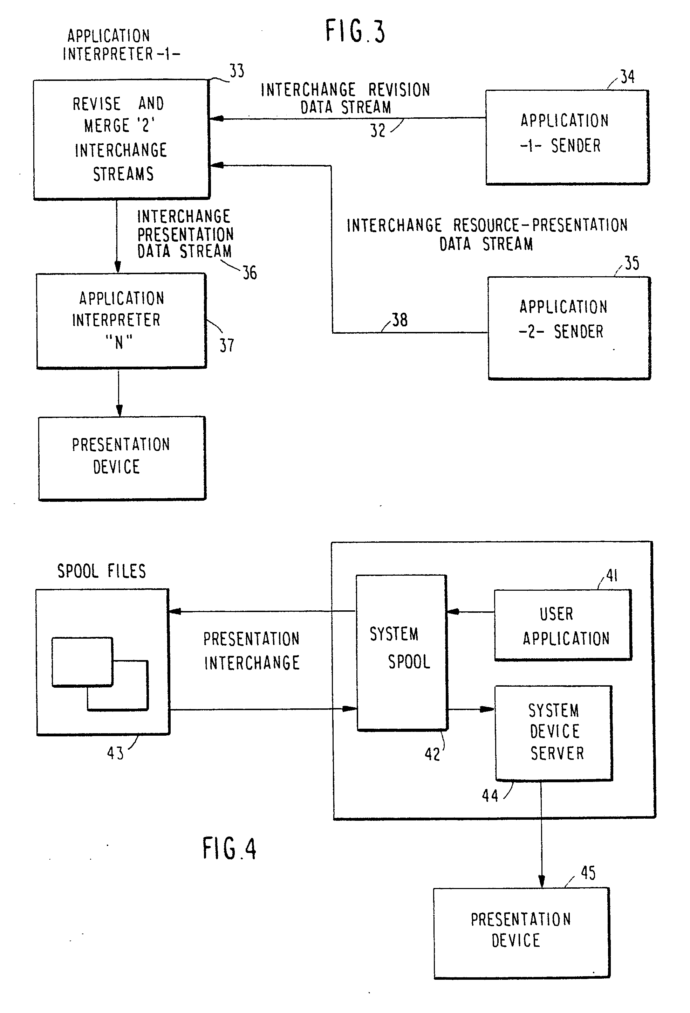

The data stream architecture according to the invention is designed to be an interchange data stream that is capable of being passed between various products. However, before the data stream is sent to a particular device, some transformation is required since the single interchange data stream is device independent. Figure 2 represents the applicable environment for the interchange data stream, while Figures 3 and 4 represent typical application environments for processing the single data stream architecture of the invention.

In Figure 2, the data stream interchange environment includes the common elements of the data stream 23 which are communicated between addressable servers or devices and other processing nodes 24. The interchange data stream 23 interfaces via a data stream interpreter 25 with presentation services 26, interactive services 27 and object services 28. Presentation services 26 makes the required transformation of the data stream to a form which can be used for device control, and the transformed data is then used to control final-form devices 29, as may be required. Interactive services 27 makes the required transformation of the data stream to a form which can be used for revisable document interaction. Library services 31 may store the interchange data stream without transformation if the library is intended for use in document interchange.

In Figure 3, the interpreter 33 receives interchange data streams 32 from application 34 and application 35. Because the single data stream architecture is understood by application interpreter 33, it can process both forms of the data stream received from applications 34 and 35. It may then produce a single data stream 36 for acceptance by yet another application interpreter 37.

In Figure 4, a user application program 41 interfaces with a spool system 42. The spool system 42 accumulates the generated data stream in a spool file 43 for subsequent retrieval by the data device server 44 in order to present the presentation document on a final-form device 45 like a printer.

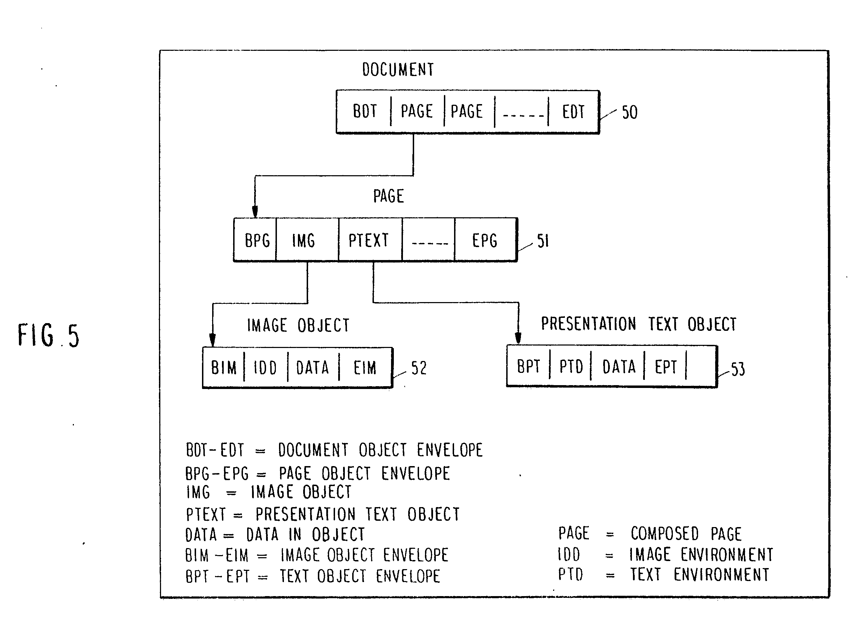

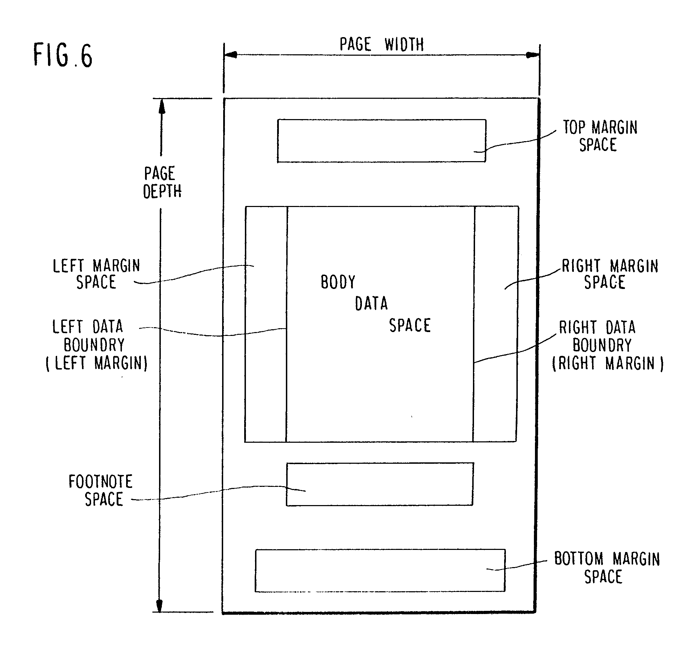

A document represents the highest level of scope definition in the single data stream architecture according to the invention. This is illustrated in Figure 5. The document 50 may be composed of resources, and/or document composition controls, pages and data. The data stream document is composed of a series of commands, i.e., structured fields, that are limited to a certain context domain. For example, a document may be composed of pages 51 which are composed of objects 52 and 53. Figure 6 illustrates and example of the page elements which may be defined in the data stream. Each of these context domains define a set of permissible structured fields and a particular document environment state.

Processors of the data stream may not implement the total possible architecture definition and thus may bypass those functions it does not understand in order to revise and/or present the document as best it can. All environment controls that influence a document are defined within a BEGIN-END document structured field pair and exist at various context domains within the document.

This single data stream definition eliminates the proliferation of different architecture protocols that describe the various states of a document. In addition, this single data stream definition fulfills interchange requirements in that it can be constructed to be totally "self-contained"; that is, all resources referenced by a document can be transferred within the same BEGIN-END document envelope. This data stream capability "guarantees" document interchange.

The following is a sample data stream of mixed object types to illustrate the principles of the invention.

```
BEGIN DOCUMENT

            •


            •

    BEGIN DOCUMENT STATE RESOURCE GROUP

           •


    ·      •

    END DOCUMENT STATE RESOURCE GROUP

           •


           •

    BEGIN PAGE

           •

        BEGIN PAGE STATE RESOURCE GROUP

          •


          •

        END PAGE STATE RESOURCE GROUP

          •
```

```
BEGIN PAGE STATE PRESENTATION or REVISION DATA
   OBJECT

      .

      .

   BEGIN OBJECT STATE RESOURCE GROUP

      .

      .

   END OBJECT STATE RESOURCE GROUP

      .

   BEGIN PAGE STATE PRESENTATION or
      REVISION DATA OBJECT

      .

      BEGIN OBJECT STATE RESOURCE GROUP

         .                                    "N"

         .                                    LEVELS

      END OBJECT STATE RESOURCE GROUP          OF

         .                                    NESTING

         .

      END PAGE STATE PRESENTATION or
         REVISION DATA OBJECT

      .

      .

   END PAGE STATE PRESENTATION or REVISION DATA
      OBJECT

      .

      .

   END PAGE

      .

END DOCUMENT
```

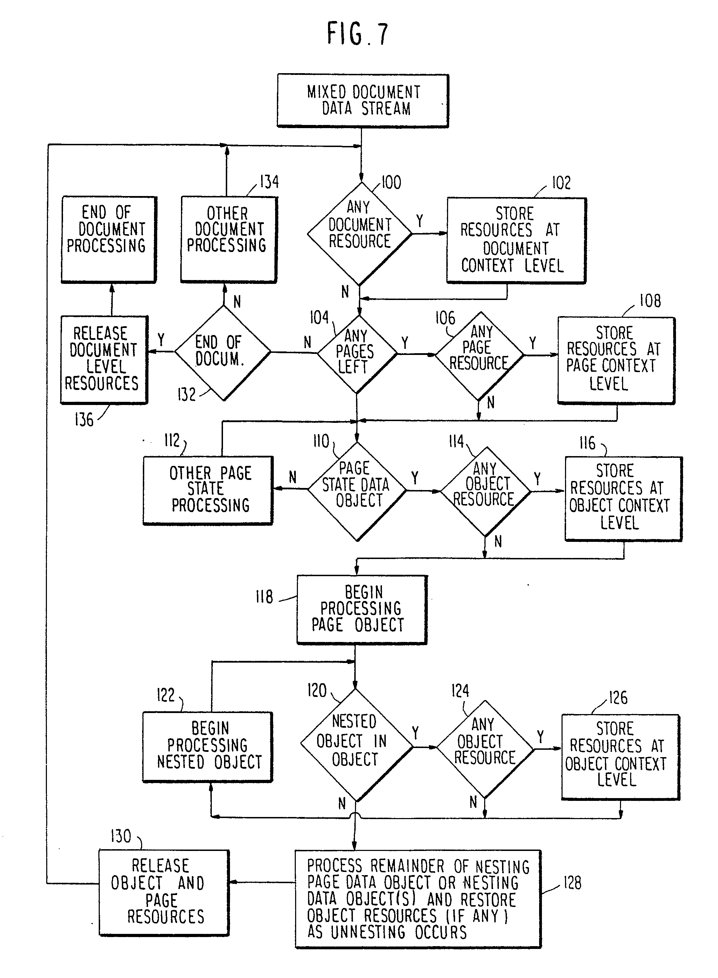

Referring now to Figure 7, there is shown a flow diagram showing the processing logic of a mixed object data stream which conforms to the data stream architecture according to the invention. The process begins by testing the data stream in decision block 100 to determine if a document resource is detected in the data stream. If so, the resources are stored at the document context level in function block 102 and then control goes to decision block 104; otherwise, control goes directly to decision block 104. In decision block 104, a test is made to determine if there are any pages left in the document to be processed. Assuming that there are, a test is next made in decision block 106 to determine if there are any page resources in the data stream. If so, the page resources are stored at page context level in function block 108 and control goes to decision block 110; otherwise, control goes directly to decision block 110. In decision block 110, a test is made to determine if a page state data object is encountered in the data stream. If so, the process loops via function block 112 to perform other page state processing. Then, in decision block 114, a test is made to determine if any object resource is encountered in the data stream. If so, the resource is stored at object context level in function block 116 and control goes to function block 118; otherwise, control goes directly to function block 118. In function block 118, page object processing begins.

5

A test is next made in decision block 120 to determine if an object is nested in an object. If so, the process loops via function block 122 to process the nested object until no further nested objects are encountered. Then, in decision block 124 a test is made to determine if any object resource is encountered in the data stream. If so, the resource is stored at object context level in function block 126 and control goes to function block 128; otherwise, control goes directly to function block 128. In function block 128, the remainder of nesting page data object or nesting data objects are processed. Then, in function block 130, the object and page resources are released before control loops back to decision block 100.

Now, assuming that the test in decision block 104 is negative, that is, no more pages are encountered in the data stream, then a test is made in decision block 132 to determine if the end of the document has been reached. If not, other document processing is performed in function block 134 before control returns to decision block 100; otherwise, the document level resources are released in function block 136 before the processing of the document ends.

The following pseudocode, written in Program Design Language (PDL), implements the logic of the flow diagram shown in Figure 7 by interpreting a mixed data stream containing revision, presentation and resource document type constructs. A programmer of ordinary skill in the art can write source code in any suitable language such as Pascal or C from which object code can be derived by means of a suitable compiler.

```
DO: Get next Document State BEGIN-END construct
   IF BEGIN-END Resource Objects in Document State
      THEN:
      Store the Resource Objects at the Document
         context level for subsequent reference
   ELSE:
      IF BEGIN Page Object in Document State THEN:
         DO: Get next Page State BEGIN-END Construct
            IF: BEGIN Data Object (Revision or Presen-
               tation) in Page State THEN:
            IF: BEGIN-END Resource Objects in Object
               State THEN:
               Store the Resource Objects in Object
                  context level for subsequent ref.
               Begin Process Page State Date Objects.
                  Object level resources are referen-
                  ced before Document level Resources
                  (Resource Search Hierarchy)
            ELSE: Begin Process Page State Data Obj.
            ENDIF:
            DO: Get nested BEGIN-END data Objects
```

```
    IF: BEGIN Data Object (Revision or
        Presentation) in Object State
        (Nested data Object) THEN:
        IF: BEGIN-END Resource Objects in
            nested Object State THEN:
            Store the Resource Objects at the
                context level for subsequent ref
            Begin Process Object State Data
                Objects. Object level resources
                are referenced before Page level
                Resources and Page level Resource
                are referenced before Document
                level Resources (Resource Search
                Hierarchy)
        ELSE: Begin Process Object State
            data Object
        ENDIF:
    ELSE:
    ENDIF:
    UNTIL: All nested BEGIN-END data Objects
        processed
        Process remainder of Page BEGIN-END
            data Objects
        Process remainder of last nested
            BEGIN-END data Objects (if any)
        Process remainder of all nesting
            BEGIN-END data Objects (if any)
        Release Object State Resources
    ENDO:
  ELSE: Process other BEGIN-END Constructs
        in page state
  ENDIF:
UNTIL: All Page State BEGIN-END constructs
    processed
    Release Page State Resources (if any)
ENDO: .
```

```
    ELSE:

    ENDIF:

ENDIF: UNTIL: All Document State BEGIN-END constructs

processed

Release Document State Resources (if any)

End of document processing

ENDO:
```

The single data stream architecture according to the invention has several advantages. First, new constructs may easily be added to the single data stream definition without affecting previous construct specifications. For example, the addition of new data type constructs such as a music object, a math object, etc., would have no effect on other constructs previously defined.

Unrecognized constructs may be easily bypassed by a receiving process since they are explicitly delimited by a BEGIN-END wrapper. Unrecognized constructs can thus be preserved for roundtripping with the sending process without loss of data.

Different sections of a document may be complete while other document sections are still in a state of revision. The single data stream architecture permits this "mixed" document to contain both document types in a single data stream instance since revision and presentation constructs are explicitly identified.

The single data stream definition with its explicit BEGIN-END delimiters provides for the separation and easy identification replacement of such document constructs such as its layout, logical and data type specifications.

Document resources may be specified in the single data stream definition to guarantee interchange with a receiving process which may not possess the referenced resources used in composition. For example, a font resource for Roman Press graphic text characters, a line type resource (solid & 3 units wide) for graphic line art, etc.

The definition of single data stream architecture allows a dialog to occur between the Publishing and Office environments. This is currently not possible due to the existence of different data streams for each environment.

While the invention has been described in terms of a single preferred embodiment, those skilled in the art will recognize that the invention can be practiced with modification within the spirit and scope of the appended claims.

**Claims**

1. A method of managing a plurality of data streams as a single data stream, said method comprising encapsulating said plurality of data streams as components of said single data stream.

2. The method according to claim 1 wherein the step of encapsulating comprises including all constructs relating to a document composition within said single data stream.

3. The method according to claim 1 wherein said plurality of data streams include revision, presentation and resource data streams and the step of encapsulating comprises bounding each said data stream with a BEGIN-END delimiter.

4. The method according to claim 3 wherein the step of encapsulating further includes nesting data streams within data streams, each said data stream being bound by its own BEGIN-END delimiter.

5. The method according to claim 1 further comprising processing said single data stream by detecting and processing each of said plurality of data streams.

6. The method according to claim 5 wherein said plurality of data streams include revision, presentation and resource data streams each bounded by a BEGIN-END delimiter and said detecting step comprises detecting each said BEGIN-END delimiter.

7. The method according to claim 6 wherein at least one data stream is nested within another data stream and said processing step includes processing nested data streams.

FIG. 1

FIG. 2

EP 0 346 259 A2

FIG.3

APPLICATION
INTERPRETER -1-

REVISE AND
MERGE '2'
INTERCHANGE
STREAMS
33

INTERCHANGE REVISION
DATA STREAM
32

APPLICATION
-1- SENDER
34

INTERCHANGE
PRESENTATION
DATA STREAM
36

INTERCHANGE RESOURCE-PRESENTATION
DATA STREAM

APPLICATION
INTERPRETER
"N"
37

APPLICATION
-2- SENDER
35

38

PRESENTATION
DEVICE

SPOOL FILES

PRESENTATION
INTERCHANGE

SYSTEM
SPOOL
42

USER
APPLICATION
41

43

SYSTEM
DEVICE
SERVER
44

FIG.4

PRESENTATION
DEVICE
45

FIG. 5

DOCUMENT

| BDT | PAGE | PAGE | ----- | EDT | ~ 50

PAGE

| BPG | IMG | PTEXT | ----- | EPG | ~ 51

IMAGE OBJECT

| BIM | IDD | DATA | EIM | ~ 52

PRESENTATION TEXT OBJECT

| BPT | PTD | DATA | EPT | | ~ 53

BDT-EDT = DOCUMENT OBJECT ENVELOPE
BPG-EPG = PAGE OBJECT ENVELOPE
IMG = IMAGE OBJECT
PTEXT = PRESENTATION TEXT OBJECT
DATA = DATA IN OBJECT
BIM -EIM = IMAGE OBJECT ENVELOPE
BPT -EPT = TEXT OBJECT ENVELOPE

PAGE = COMPOSED PAGE
IDD = IMAGE ENVIRONMENT
PTD = TEXT ENVIRONMENT

FIG.6

# FIG. 7